# EUROPÄISCHE PATENTSCHRIFT

(11) **EP 3 683 071 B1**
(45) Veröffentlichungstag und Bekanntmachung des Hinweises auf die Patenterteilung: **02.06.2021**
(21) Anmeldenummer: 20151719.0
(22) Anmeldetag: 14.01.2020
(51) Int. Cl.: F16F 9/04, B60G 11/27, B60G 17/019, F16F 9/05, F16F 9/32, G01B 17/00, G01S 15/88, G01S 15/34

(54) **LUFTFEDER**
PNEUMATIC SPRING
RESSORT PNEUMATIQUE

(30) Priorität: 18.01.2019 DE 102019101323
(43) Veröffentlichungstag der Anmeldung: 22.07.2020
(73) Patentinhaber: ZF CV Systems Hannover GmbH, 30453 Hannover (DE)
(72) Erfinder: DIET, Felix, 31552 Rodenberg (DE); STENDER, Axel, 31787 Hameln (DE); GERLACH, Steffen, 30169 Hannover (DE)
(74) Vertreter: Ohlendorf, Henrike

(56) Entgegenhaltungen:
- EP-A1- 0 984 191
- WO-A1-2007/017022
- WO-A1-2020/064161
- WO-A1-2020/104195
- DE-A1- 19 811 982
- DE-A1-102010 001 886
- DE-B4- 10 025 631
- US-A- 4 798 369

## Beschreibung

Die Erfindung betrifft eine Luftfeder für ein Fahrzeug, mit einem schlauchartigen Balg, dessen erstes axiales Ende an einer karosserieseitigen Abdeckplatte und dessen zweites axiales Ende an einem fahrwerksseitigen Abstützbauteil zur Ausbildung und Umgrenzung eines geschlossenen Innenraumes befestigt ist, sowie mit Mitteln zum Feststellen der Einfederungslänge der Luftfeder. Außerdem betrifft die Erfindung ein Verfahren zur Bestimmung der betriebsbedingt jeweiligen Einfederungslänge der Luftfeder.

Luftfedern kommen bei Schienenfahrzeugen, Lastkraftwagen und vereinzelt bei Personenkraftwagen zum Einsatz, da aufgrund einer fehlenden Eigendämpfung ein sensibles Ansprechverhalten mit einem hohen Federungskomfort realisierbar ist. Darüber hinaus kann mittels einer Luftfederung eine Fahrzeughöhe belastungsabhängig eingestellt werden, wobei im Fall von höheren Lasten das Federungsverhalten härter wird. Mittels einer flexibel einstellbaren Luftfederung kann zudem die Fahrzeughöhe an ein vorgegebenes Niveau einer Ladekante, an eine maximale Unterfahrhöhe eines Bauwerks, wie einer Brücke oder dergleichen, angepasst werden. Luftfedern weisen einen in der Regel faserarmierten elastischen Balg auf, dessen eines Ende an einem Fahrgestell und dessen hiervon weggerichtetes anderes Ende an einem fahrwerksseitigen Abstützbauteil, wie beispielsweise einem Stützkolben befestigt ist. Zur präzisen Einstellung einer gewünschten Fahrzeughöhe ist es erforderlich, die aktuelle axiale Höhe beziehungsweise Einfederungslänge einer jeden der Luftfedern der Luftfederung zu ermitteln und erforderlichenfalls durch das kontrollierte Zuführen oder Ablassen von Druckluft entsprechend den Vorgaben einzustellen.

Aus der EP 0 984 191 A1 ist eine Luftfeder mit einer integrierten Ultraschall-Höhenmesseinrichtung bekannt. Ein in eine Luftfeder zur Höhenmessung eingebauter Ultraschallsensor kann im Betrieb gestört werden, wenn beim Befüllen beziehungsweise Entlüften der Luftfeder hochfrequente Schallschwingungen auftreten. Zur Unterdrückung derartiger Störfrequenzen weist eine zwischen der Luftfeder und der Druckmittelquelle positionierte Luftversorgungsleitung ein Luftanschlussrohr auf, das an seiner Innenwandung mit einem netzförmigen Belag ausgekleidet ist. Infolgedessen können Turbulenzen und Verwirbelungen, die zu hochfrequenten Schallschwingungen führen können, unterdrückt werden, so dass eine Störung der Messeinrichtung vermieden wird.

Aus der DE 100 25 631 B4 ist ferner ein Verfahren zur Niveaumessung an einem Kraftfahrzeug bekannt. Bei diesem Verfahren wird eine Relativposition zwischen Radträger und Fahrzeugaufbau bestimmt, wobei eine einen Hohlraum aufweisende Luftfeder zur Abstützung des Fahrzeugaufbaus als ein Hohlraumresonator für hochfrequente Schwingungen dient. In einem Hohlraum der Luftfeder sind eine Hochfrequenz-Sendeantenne und eine Hochfrequenz-Empfangsantenne angeordnet. Die Sende- und Empfangsfrequenzen eines Hochfrequenzsignals werden mittels einer Speise- und/oder Auswerteeinrichtung im Hinblick auf das Volumen des Hohlraums analysiert, wodurch die Relativposition zwischen dem Radträger und dem Fahrzeugaufbau erfassbar ist. Der Hohlraumresonator umfasst im Wesentlichen den Luftfederbalg, eine Abdeckplatte sowie einen Abrollkolben der Luftfeder, deren Innenoberflächen jeweils elektrisch leitend ausgebildet sein müssen. Eine Resonanzfrequenz des in den Innenraum der Luftfeder eingekoppelten elektromagnetischen Hochfrequenzsignals wird mit der Schwingfrequenz eines Quarzes als ein hochpräzises Referenznormal in Bezug gesetzt. Von Nachteil ist unter anderem, dass der Balg der Luftfeder innenseitig sowie der Abrollkolben außenseitig elektrisch leitfähig ausgebildet sein müssen.

Der Erfindung lag die Aufgabe zugrunde, eine Luftfeder mit einer verbesserten Messeinrichtung zur Bestimmung der Einfederungslänge der Luftfeder vorzustellen. Außerdem sollte ein Verfahren zur akustischen Messung der Einfederungslänge einer solchen Luftfeder angegeben werden. Schließlich soll ein Steuergerät genannt werden, welches zur Durchführung des genannten Verfahrens ausgebildet ist.

Die Lösung dieser Aufgaben wird mit einer Luftfeder, einem Verfahren sowie mit einem Steuergerät gemäß den unabhängigen Patentansprüchen erreicht. Vorteilhafte Weiterbildungen sind in den abhängigen Ansprüchen definiert.

Die Erfindung betrifft demnach zunächst eine Luftfeder für ein Fahrzeug, mit einem schlauchartigen Balg, dessen erstes axiales Ende an einer karosserieseitigen Abdeckplatte und dessen zweites axiales Ende an einem fahrwerksseitigen Abstützbauteil zur Ausbildung und Umgrenzung eines geschlossenen Innenraumes befestigt ist, sowie mit Mitteln zum Feststellen der Einfederungslänge der Luftfeder.

Zur Lösung der vorrichtungsbezogenen Aufgabe ist vorgesehen, dass im Bereich einer in Richtung des Innenraumes weisenden Innenfläche der Abdeckplatte mindestens eine akustische Schallquelle und mindestens ein akustischer Schallsensor angeordnet sind, dass das akustische Signal der Schallquelle ein angenähertes Rauschsignal, ein akustisches Chirp-Signal oder ein akustisches Sweep-Signal mit Frequenzen zwischen 0 Hz und 20000 Hz ist, dass der mindestens eine Schallsensor zur Weiterleitung eines Ausgangssignals desselben mit einer Elektronikeinheit signaltechnisch verbunden ist, und dass die Elektronikeinheit derartig ausgebildet ist, dass mittels des Ausgangssignals des akustischen Schallsensors der Abstand zwischen der Innenfläche der Abdeckplatte sowie einer Stirnfläche des Abstützbauteils und somit die Einfederungslänge der Luftfeder ermittelbar ist.

Hierdurch ist eine berührungslose und vollständig gegen nachteilige Umwelteinflüsse gesicherte Messung des Abstandes zwischen der Abdeckplatte und dem Abstützbauteil der Luftfeder für ein Fahrzeug möglich. Der jeweilige Abstandswert ermöglicht die Bestimmung der betriebsbedingten Einfederungslänge der Luftfeder. Diese Einfederungslänge erstreckt sich zwischen den beiden axialen Enden der Luftfeder, also zwischen dem karosserieseitigen freien Ende der Abdeckplatte und dem fahrwerkseitigen freien Ende des Abstützbauteils der Luftfeder.

Aus dem gemessenen Abstand zwischen der Abdeckplatte und dem Abstützbauteil der Luftfeder lässt sich in Verbindung mit den bekannten geometrischen Abmessungen eines Aufbaus des Fahrzeugs eine resultierende Gesamthöhe des luftgefederten und damit höhenregulierbaren Fahrzeugs ermitteln, welche für Lastwagen zum Beispiel maximal vier Meter beträgt. Da die Schallquelle, der Schallsensor und gegebenenfalls auch die Elektronikeinheit vollständig in die Luftfeder integriert sind, ist eine kostengünstige Montage der Luftfeder in einem Fahrzeug möglich. Im Gegensatz zu bekannten technischen Lösungen zur Längenmessung bei Luftfedern mit einem außenliegenden Gestänge und Weg- oder Drehwinkelgebern sind bei der erfindungsgemäßen Lösung keine zusätzlichen externen und schädlichen Umgebungseinflüssen ausgesetzte Komponenten erforderlich.

Da die erfindungsgemäße Luftfeder ein akustisches Signal zur Längenmessung nutzt, ist im Unterschied zu der Nutzung von elektromagnetischen Signalen keine innenseitig elektrisch leitfähige Ausrüstung des Balgs der Luftfeder oder anderer den Innenraum begrenzenden Bauteile notwendig.

Gemäß einer besonders günstigen Ausgestaltung ist vorgesehen, dass das akustische Signal ein angenähertes Rauschsignal, ein akustisches Chirp-Signal oder ein akustisches Sweep-Signal mit Frequenzen zwischen 0 Hz und 3000 Hz ist. Infolgedessen enthält das akustische Signal eine Vielzahl von Schwingungen, die zur Ermittlung der gewünschten Abstandsinformation genutzt werden. Zur Identifizierung der Eigenfrequenzen des Innenraumes des Balgs der Luftfeder ist es notwendig, zu jedem Zeitpunkt zu analysieren, auf welche Frequenzen der Innenraum der Luftfeder mit hohen Schwingungsamplituden antwortet. Die betreffenden Frequenzen verkörpern die Eigenfrequenzen des Innenraums des Balgs der Luftfeder. Darüber hinaus handelt es sich um akustische Signale vom hörbaren bis hin zum unteren Ultraschallbereich, die mit einem vergleichsweise geringen elektronischen Aufwand erzeugbar und sensierbar sind.

Vorzugsweise ist die Elektronikeinheit beziehungsweise ein diesbezügliches Steuergerät dazu ausgebildet, das Ausgangssignal des mindestens einen Schallsensors mittels einer Frequenzanalyse in Echtzeit auszuwerten. Infolgedessen kann der Abstand und somit die relevante Einfederungslänge der Luftfeder praktisch verzögerungsfrei ermittelt sowie erforderlichenfalls an eine aktuelle Vorgabe angepasst werden.

Wie erwähnt kann die Vorrichtung auch derartig ausgebildet sein, dass diese ein akustisches Chirp-Signal oder ein akustisches Sweep-Signal erzeugen und auswerten kann. Unter einem akustischen Chirp-Signal wird ein Signal verstanden, dessen Frequenz sich zeitlich ändert. Bei einem positiven Chirp-Signal steigt die Frequenz des Signals über die Zeit an, während bei einem negativen Chirp-Signal die Frequenz des Signals über die Zeit abnimmt. Ein akustisches Sweep-Signal ist ein Signal mit konstanter Amplitude über die Zeit, deren Frequenz periodisch und stetig einen vorgegebenen Frequenzbereich durchläuft. Die Schallquelle der Luftfeder kann hierzu akustische Chirp-Signale oder akustische Sweep-Signale mit Frequenzen zwischen 0 Hz und 20000 Hz, bevorzugt zwischen 0 Hz und 3000 Hz erzeugen.

Darüber hinaus betrifft die Erfindung ein Verfahren zur Bestimmung eines Abstandes zwischen einer Innenfläche einer karosserieseitigen Abdeckplatte und einer Stirnfläche eines fahrwerksseitigen Abstützbauteils einer Luftfeder für ein Kraftfahrzeug gemäß einem der Vorrichtungsansprüche, wobei ein erstes axiales Ende eines Balgs an der Abdeckplatte und ein zweites axiales Ende des Balgs an dem fahrwerkseitigem Abstützbauteil zur Ausbildung und Umgrenzung eines geschlossenen Innenraumes befestigt ist. Das Verfahren ist gekennzeichnet durch die folgenden Schritte:
a) Einkoppeln eines akustischen Signals in den Innenraum der Luftfeder mittels mindestens einer im Bereich der Innenfläche der Abdeckplatte angeordneten akustischen Schallquelle,
b) Messen eines akustischen Antwortsignals, dieses erzeugt durch Reflektion des akustischen Signals an wenigstens einem den Innenraum begrenzenden Bauteil, mittels mindestens eines im Bereich der Innenfläche der Abdeckplatte positionierten akustischen Schallsensors zum Erzeugen eines elektronisch auswertbaren Ausgangssignals desselben, und
c) Auswerten des Ausgangssignals des mindestens einen Schallsensors mittels einer Elektronikeinheit zur Bestimmung des Abstandes und damit der Einfederungslänge der Luftfeder.

Hierdurch ist eine hochgenaue, berührungslose und vor schädlichen Umwelteinflüssen zuverlässig abgeschirmte Messung des Abstandes beziehungsweise der Einfederungslänge der Luftfeder zwischen deren Abdeckplatte und Abstützbauteil möglich. Mit diesem Abstandswert kann die resultierende Gesamthöhe eines mit der Luftfeder ausgerüsteten Fahrzeugs oder etwa die Höhe der Ladekante des Fahrzeugs berechnet werden.

Gemäß einer vorteilhaften Weiterbildung des gerade beschriebenen Verfahrens wird mit der mindestens einen Schallquelle ein angenähertes Rauschsignal mit Frequenzen zwischen 0 Hz und 20000 Hz, jedoch vorzugsweise zwischen 0 Hz und 3000 Hz erzeugt. Hierdurch stehen zur Erfassung des Abstands heutzutage messtechnisch verhältnismäßig leicht zu erzeugende, auszuwertende und zugleich störsichere Schallsignale zur Verfügung. Die Frequenz der Schallsignale erstreckt sich von einem von dem menschlichen Ohr wahrnehmbaren Bereich bis hinein in den niedrigen beziehungsweise unteren Ultraschallbereich, sodass eine Vielzahl von Eigenfrequenzen des Innenraumes der Luftfeder zeitgleich anregbar sind.

Weiter kann verfahrensgemäß vorgesehen sein, dass das akustische Signal der Schallquelle ein akustisches Chirp-Signal oder ein akustisches Sweep-Signal ist, mit Frequenzen zwischen 0 Hz und 20000 Hz, jedoch vorzugsweise zwischen 0 Hz und 3000 Hz. Bei derartigen Chirp-Signal oder Sweep-Signalen werden in schneller zeitlicher Abfolge die akustischen Töne der jeweiligen Frequenz über das vorgesehene Frequenzspektrum erzeugt.

Weiter ist bevorzugt vorgesehen, dass das Ausgangssignal des Schallsensors mittels einer Frequenzanalyse zur Erzeugung eines Frequenzspektrums ausgewertet wird. Hierdurch ist eine Erhöhung der Messsicherheit der erwähnten Abstandsmessung der Luftfeder möglich, da mehrere Eigenfrequenzen zur eindeutigen Auswertung und Bestimmung des Abstands durch die Elektronikeinheit zur Verfügung stehen.

Gemäß einer anderen Weiterbildung ist vorgesehen, dass mittels mindestens einer Eigenfrequenz f_{1,...,n} mit einer zugeordneten Ordnungszahl n der Raummode aus dem Frequenzspektrum sowie mit der Gleichung A = (c₀ ×n) / (2 x fₙ) die Bestimmung des jeweiligen Abstands (A_{1,} A₂, A₃) zwischen der Abdeckplatte und dem Abstützbauteil der Luftfeder erfolgt, wobei c₀ die Schallgeschwindigkeit, n eine Ordnungszahl und fₙ die Eigenfrequenz ist. Die Zuordnung der jeweiligen Raummode in Form von natürlichen Zahlen 1, 2, 3, ... bis ∞ erfolgt hierbei aufgrund eines Amplitudenverhältnisses der verschiedenen Eigenfrequenzen innerhalb des Frequenzspektrums. Alternativ dazu kann zum Beispiel auch ein Einlernen der Elektronikeinheit auf die Ausgangssignale des Schallsensors zur Abstandsmessung mittels eines neuronalen Netzes oder dergleichen erfolgen.

Außerdem kann in Weiterbildung des Verfahrens vorgesehen sein, dass mithilfe des ermittelten Abstandes beziehungsweise mithilfe der Einfederungslänge der Luftfeder eine resultierende Gesamthöhe eines mit der Luftfeder ausgerüsteten Fahrzeugs durch die Elektronikeinheit bestimmt wird. Hierdurch lässt sich zum Beispiel die praxisrelevante maximale Höhe des Aufbaus des Fahrzeugs oder die aktuelle Höhe seiner Ladekante ermitteln.

Bevorzugt werden beim Auswerten des Ausgangssignals des Schallsensors zur Bestimmung des erwähnten Abstandes zuvor abgespeicherte Kalibrierparameter von einer vorab erfolgten Kalibrierung des Messsystems und der Elektronikeinheit berücksichtigt. Infolgedessen kann die Elektronikeinheit den Abstand von konstruktiv unterschiedlich aufgebauten Typen oder Arten von Luftfedern ermitteln. Zudem lassen sich hierdurch fertigungstechnisch bedingte Toleranzabweichungen bei Luftfedern gleicher Bauart leicht ausgleichen.

Bei einer weiteren günstigen Weiterbildung des Verfahrens ist vorgesehen, dass die erwähnte Kalibrierung mit mindestens drei unterschiedlichen bekannten Kalibrierabständen der Luftfeder erfolgt, wobei diese Kalibrierabstände insbesondere mit einem Fahrniveau, einem Maximalniveau und einem Minimalniveau eines mit der Luftfeder ausgerüsteten Fahrzeugs korrespondieren. Hierdurch ist sichergestellt, dass die wesentlichen betriebsrelevanten Höhenlagen des luftgefederten Fahrzeugs, in denen sich dieses am häufigsten befindet, besonders zuverlässig kalibriert sind und mit bestmöglicher Genauigkeit dauerhaft sowie sicher reproduzierbar von der Elektronikeinheit bestimmbar sind.

Schließlich betrifft die Erfindung eine Elektronikeinheit beziehungsweise ein Steuergerät, welches zur Durchführung des beschriebenen Verfahrens ausgebildet ist. Dieses Steuergerät kann jeweils separat an einer jeden Luftfeder ausgebildet und angeordnet sein. Das Steuergerät kann aber auch zur Höhen- oder Abstandsmessung aller Luftfedern an einem Einzelfahrzeug, einem Zugfahrzeug oder einem Anhängerfahrzeug ausgebildet sein.

Zum besseren Verständnis der Erfindung ist der Beschreibung eine Zeichnung mit Ausführungsbeispielen beigefügt. In der Zeichnung zeigt
Fig. 1 eine schematische Längsschnittdarstellung einer erfindungsgemäßen Luftfeder mit einer Schallquelle, einem Schallsensor und einer Elektronikeinheit zur Messung der Einfederungslänge der Luftfeder,
Fig. 2 einen prinzipiellen Verlauf eines von der Schallquelle erzeugten akustischen Signals in Form eines angenäherten akustischen, weißen Rauschens, und
Fig. 3 ein von der Elektronikeinheit ermitteltes Frequenzspektrum eines von dem Schallsensor erzeugten elektronisch auswertbaren Ausgangssignals.

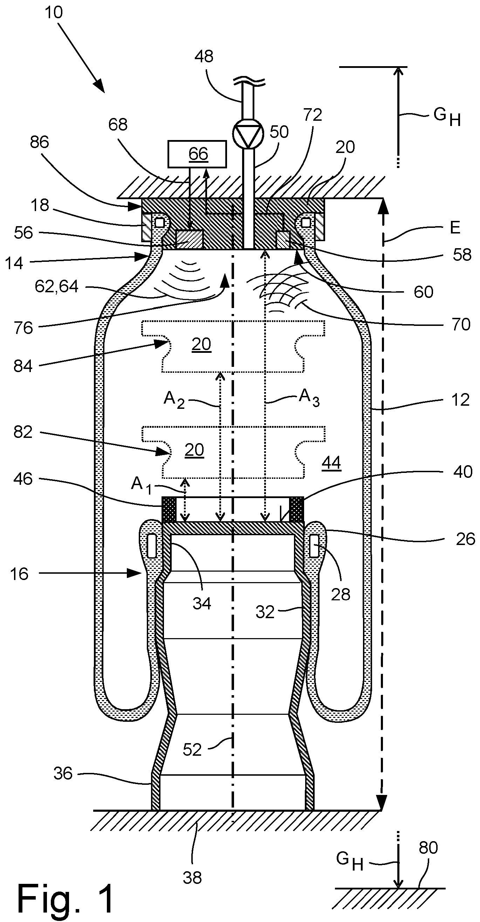

Die Fig. 1 zeigt demnach einen schematischen Längsschnitt entlang einer Längsmittelachse 52 einer erfindungsgemäßen Luftfeder 10. Die Luftfeder 10 weist einen schlauchartigen beziehungsweise hohlzylindrischen Rollbalg 12 auf, der ein erstes axiales Ende 14 und ein zweites axiales Ende 16 hat. Der Rollbalg 12 besteht aus einem vorzugsweise Verstärkungseinlagen aufweisenden elastomeren Kunststoff, wie zum Beispiel einem faserarmierten Gummi- oder Silikonmaterial. Das erste axiale Ende 14 des Rollbalgs 12 ist mittels einer Spannmanschette 18 mit einer näherungsweise zylindrischen, karosserieseitigen Abdeckplatte 20 verbunden. Durch die Spannmanschette 18 ist das erste axiale Ende 14 des Rollbalgs 12 druckdicht mit der Abdeckplatte 20 der Luftfeder 10 und diese mit der nur schematisch dargestellten Karosserie eines Fahrzeugs verbunden. Bei dem Fahrzeug kann es sich beispielsweise um ein beliebiges Straßenfahrzeug oder ein schienengebundenes Fahrzeug handeln. An dem zweiten axialen Ende 16 des Rollbalgs 12 ist eine Ringwulst 26 ausgebildet, in die ein bevorzugt metallischer sowie federelastischer Spannring 28 integriert ist, welches zum Beispiel durch Einvulkanisieren oder Einkleben erfolgt sein kann. Der Spannring 28 ist dabei allseitig in das faserarmierte Gummi- oder Silikonmaterial des Rollbalgs 12 eingebettet.

Ein fahrwerksseitiger, angenähert hohlzylindrischer Stützkolben 32 oder Abrollkolben der Luftfeder 10 verfügt über ein freies axiales Ende 34 sowie ein hiervon weggerichtetes fahrwerksseitiges Ende 36. Das fahrwerksseitige Ende 36 des Stützkolbens 32 ist fest mit einem Fahrwerk 38 beziehungsweise mit einem Fahrwerksteil, wie einem Achsträger des Kraftfahrzeugs verbunden. An dem bundartig verjüngten freien axialen Ende 34 des Stützkolbens 32 ist die Ringwulst 26 des zweiten Endes 16 des Rollbalgs 12 mittels des Spannrings 28 befestigt. Das freie axiale Ende 34 des Stützkolbens 32 ist mit einer Stirnfläche 40 geschlossen ausgebildet, sodass der Rollbalg 12 zusammen mit der Abdeckplatte 20 und der Stirnfläche 40 des Stützkolbens 32 einen druckdichten Innenraum 44 ausbildet beziehungsweise umgrenzt. Auf der Stirnfläche 40 des Stützkolbens 32 ist ferner ein hier hohlzylindrisches gummielastisches Stützpolster 46 angeordnet, sodass im Fall eines vollständig drucklosen Innenraumes 44 der Luftfeder 10, also etwa bei einem Fehlerfall oder dergleichen, eine zuverlässige definierte Anlage für die Abdeckplatte 20 auf dem Stützkolben 32 gegeben ist.

Mittels einer Druckversorgung 48 und einer durch die Abdeckplatte 20 führenden Zuleitung 50 lässt sich der Innenraum 44 der Luftfeder 10 mit einem geeigneten gasförmigen Medium, insbesondere mit Druckluft, zur variablen Einstellung einer effektiven Einfederungslänge E der Luftfeder 10 beaufschlagen.

In die Abdeckplatte 20 ist mindestens eine Schallquelle 56 sowie mindestens ein Schallsensor 58 integriert, die hier lediglich beispielhaft bündig mit einer in Richtung des Innenraumes 44 weisenden Innenfläche 60 der Abdeckplatte 22 abschließen.
Mithilfe des Schallsensors 58 wird ein komplexes akustisches Signal 62 in den Innenraum 44 der Luftfeder 10 eingekoppelt. Bei dem akustischen Signal 62 handelt es sich bevorzugt um ein angenähertes sogenanntes "weißes" Rauschsignal 64 mit Frequenzen zwischen 0 Hz und 20000 Hz. Besonders bevorzugt weist das akustische Signal 62 geringere Frequenzen im Bereich von 0 Hz bis zu 3000 Hz auf.

Die Ansteuerung der Schallquelle 56 erfolgt mittels einer leistungsfähigen digitalen Elektronikeinheit 66 über eine elektrische Zuleitung 68. Diese Elektronikeinheit 66 kann als ein Steuergerät ausgebildet sein, welches nur einer oder mehrerer Luftfedern 10 zugeordnet ist.

Das in den Innenraum 44 eingekoppelte akustische Signal 62 führt zu einem komplexen akustischen Antwortsignal 70 des ganzen Innenraumes 44 der Luftfeder 10 beziehungsweise der diesen Innenraum 44 begrenzenden Bauteilwände, welches mittels des mindestens einen Schallsensors 58 in ein elektronisch auswertbares Ausgangssignal 72 transformiert, an die Elektronikeinheit 66 übertragen und in dieser bevorzugt in Echtzeit ausgewertet wird. Die Elektronikeinheit 66 beziehungsweise das Steuergerät ist demnach auch zur verfahrensgemäßen Auswertung des Ausgangssignals 72 von wenigstens einem Schallsensor 58 ausgebildet.

Die mindestens eine Schallquelle 56, der mindestens eine Schallsensor 58 sowie die Elektronikeinheit 66 sind vorzugsweise im Bereich der Abdeckplatte 20 der Luftfeder 10 angeordnet und bilden im Zusammenwirken eine Höhenmesseinrichtung 76 zur exakten Ermittlung einer aktuellen Einfederungslänge E der Luftfeder 10. Abweichend von der in Fig. 1 gezeigten Darstellung kann die Elektronikeinheit 66 beispielsweise auch räumlich weiter beabstandet zur Schallquelle 56 und zum Schallsensor 58 angeordnet sein. So kann diese Elektronikeinheit 66 beispielsweise in einem Nutzfahrzeug in ein übergeordnetes zugfahrzeugseitiges Steuerungs- und Regelungsgerät integriert sein.

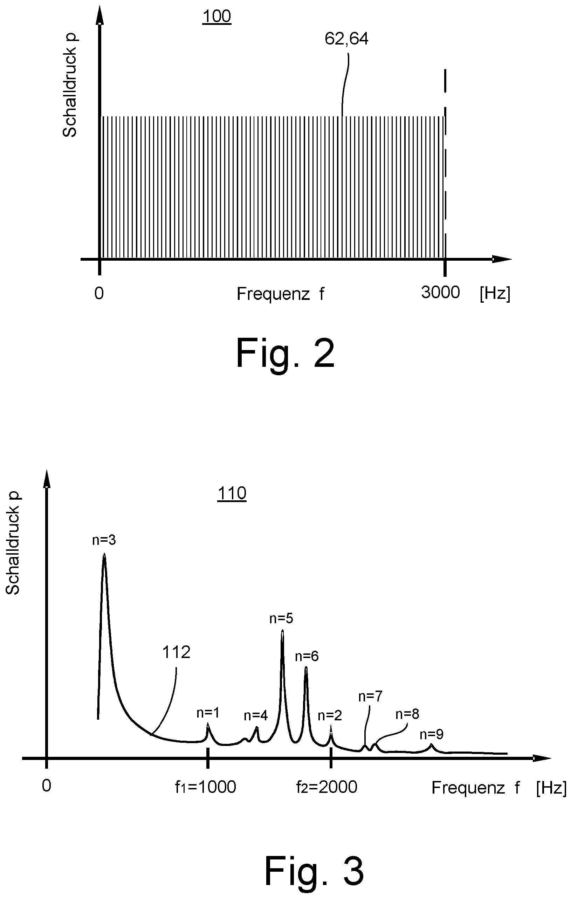

Die Elektronikeinheit 66 ist dazu vorgesehen und ausgebildet, das komplexe, aus einer Vielzahl von einander überlagerten akustischen Frequenzen bestehendes Ausgangssignal 72 des mindestens einen Schallsensors 58 vorzugsweise mittels einer Frequenzanalyse zur Erzeugung eines Frequenzspektrums (Fig. 3) in Echtzeit auszuwerten. Hierdurch lässt sich jeweils ein aktueller Abstand A₁, A₂, A₃ zwischen der Innenfläche 60 der Abdeckplatte 20 und der Stirnfläche 40 des Stützkolbens 32 bestimmen, um daraus bei im Übrigen als bekannt vorausgesetzten geometrischen Abmessungen eine effektive Einfederungslänge E der Luftfeder 10 zu berechnen.

Die beiden weiteren axialen Zwischenpositionen der Abdeckplatte 20 und damit auch des Rollbalgs 12 in Bezug zum Stützkolben 32 sind jeweils mittels einer gepunktet gezeichneten Umrisslinie der Abdeckplatte 20 dargestellt. Aus dem aktuellen Abstand A_{1,} A₂, A₃ lässt sich dann eine resultierende Gesamthöhe G_{H} des Fahrzeugs bestimmen, und zwar ausgehend von einem Untergrund 80, auf dem das Fahrzeug bewegt wird.

Der erste Abstand A₁ steht für ein Minimalniveau 82 der Luftfeder 10, kurz vor dem Aufsetzen der Abdeckplatte 20 auf dem Stützpolster 46 des Stützkolbens 32. Der zweite Abstand A₂ repräsentiert ein Fahrniveau 84, in dem das mit der Luftfeder 10 ausgerüstete Fahrzeug im Normalfall betrieben wird. Das Minimalniveau 82 und das normale Fahrniveau 84 der Luftfeder 10 sind zeichnerisch lediglich durch die mit gepunkteter Line gezeichnete Umrissdarstellung der Abdeckplatte 20 angedeutet. Der dritte Abstand A₃, in dem die Abdeckplatte 20 mit durchgezogenen schwarzen Linien dargestellt ist, korrespondiert schließlich mit einem Maximalniveau 86 der Luftfeder 10, in dem zeichnerisch nicht dargestellte Stoßdämpfer des Fahrzeugs die maximal zulässige Ausfallposition einnehmen.

In einem ersten Verfahrensschritt a) des erfindungsgemäßen Verfahrens wird das komplexe akustische Signal 62 beziehungsweise das Rauschsignal 64 in den Innenraum 44 der Luftfeder 10 mittels der Schallquelle 56 eingekoppelt. In einem zweiten Verfahrensschritt b) erfolgt das Messen des akustischen Antwortsignals 70 mit Hilfe des vorzugsweise im Bereich der Innenfläche 60 der Abdeckplatte 20 der Luftfeder 10 angeordneten Schallsensors 58. In einem abschließenden dritten Verfahrensschritt c) wird das elektronisch auswertbare Ausgangssignal 72 des Schallsensors 58 mithilfe der Elektronikeinheit 66 einer umfangreichen numerischen Auswertung zur Bestimmung des jeweiligen Abstandes A_{1,} A₂, A₃ und damit der aktuellen effektiven Einfederungslänge E der Luftfeder 10 ausgewertet. Aus der Einfederungslänge E der Luftfeder 10 lässt sich bei Kenntnis der geometrischen Abmessungen des Fahrzeugs zum Bespiel die resultierende Gesamthöhe G_{H} des Aufbaus des Fahrzeugs, bezogen auf den Untergrund 80 ebenfalls mithilfe der Elektronikeinheit 66 berechnen.

Eine erste Gleichung fₙ = (c₀ × n) / (2 × A) bestimmt die Eigenfrequenzen fₙ eines mit einem idealen Hohlzylinder gebildeten akustischen Hohlraumresonators an, dessen beidseitige Deckflächen in einem axialen Abstand A voneinander angeordnet sind.

Die Berechnung des jeweiligen Abstandes A_{1,} A₂, A₃ erfolgt üblicherweise mithilfe einer Vielzahl von Eigenfrequenzen des Innenraumes 44 der Luftfeder 10 mit einer zugeordneten Ordnungszahl n der betreffenden Raummoden des numerisch ermittelten Frequenzspektrums des akustischen Antwortsignals 70 nach Maßgabe einer zweiten Gleichung A = (c₀ × n) / (2 × fₙ), welche sich aus einer Umformung der ersten Gleichung ergibt. Die Variable c₀ steht hierbei für die Schallgeschwindigkeit im Hohlzylinder und die natürliche Zahl n für die Ordnungszahl einer Raummode mit der zugehörigen Eigenfrequenz fₙ des Innenraumes 44 der Luftfeder 10, deren akustische Schwingungseigenschaften mittels der beiden Gleichungen näherungsweise beschrieben sind (siehe auch Fig. 3, Bezugszeichen n, fₙ).

Bevorzugt werden bei der Auswertung des Ausgangssignals 72 des Schallsensors 58 Kalibrierparameter von einer vorzugsweise vorab erfolgten Kalibrierung der Elektronikeinheit 66 mitberücksichtigt. Die Kalibrierung der Elektronikeinheit 66 erfolgt in diesem Zusammenhang anhand von mindestens drei unterschiedlichen sowie mit möglichst hoher Genauigkeit bekannten Kalibrierabständen der Luftfeder 10, beispielsweise der Abstände A_{1,} A₂, A₃. Bei den zur Kalibrierung herangezogenen Kalibrierparametern kann es sich demnach beispielsweise um das Minimalniveau 82, das Fahrniveau 84 und das Maximalniveau 86 der Luftfeder 10 handeln, da diese Höhenlagen zur Gewährleistung eines sicheren Fahrbetriebs in der Regel mit einer möglichst hohen Genauigkeit bekannt sein müssen.

Darüber hinaus lassen sich durch die Kalibrierung die aktuellen Höhen von konstruktiv unterschiedlichen Typen von Luftfedern mittels der Elektronikeinheit 66, der Schallquelle 56 sowie dem Schallsensor 58 vermessen. Zudem können fertigungsbedingte geometrische Abweichungen desselben Luftfedertyps bei der erfindungsgemäßen Einfederungslängenmessung Berücksichtigung finden.

Die Fig. 2 zeigt einen prinzipiellen Verlauf eines von der Schallquelle 56 erzeugten akustischen Signals in Form eines angenäherten akustischen "weißen" Rauschens. Auf der Ordinate eines Diagramms 100 ist der Schalldruck p des akustischen Signals 62 aufgetragen, während die Abszisse die Frequenz f des akustischen Signals 62 in Hertz angibt. Die Frequenzen des akustischen Signals 62 betragen hier lediglich exemplarisch zwischen 0 Hz und 3000 Hz. Der Schalldruck p des akustischen Signals 62 ist über den gesamten Frequenzbereich von hier 3000 Hz hinweg im Wesentlichen konstant, sodass das akustische Signal 62 näherungsweise als ein "weißes" Rauschsignal 64 angesehen werden kann.

Die Fig. 3 zeigt ein von der Elektronikeinheit 66 ermitteltes Frequenzspektrum eines von dem Schallsensor 58 erzeugten elektronisch auswertbaren Ausgangssignals 72. Das dortige Diagramm 110 zeigt ein beispielhaftes, durch die Frequenzanalyse mittels der Elektronikeinheit 66 gewonnenes, lediglich schematisches Frequenzspektrum 112 eines durch das Rauschsignal 62, 64 gemäß Fig. 2 im Innenraum 44 der Luftfeder hervorgerufenen komplexen akustischen Antwortsignals 70. Auf der Ordinate des Diagramms 110 ist ebenfalls der Schalldruckpegel p und auf der Abszisse ist die Frequenz f in Hertz aufgetragen.

Wie Fig. 3 für das gewählte Beispiel zeigt, ergeben sich hier lediglich exemplarisch neun charakteristische Eigenfrequenzen f_{1,...,}f₉ von Raummoden mit jeweils zugehörigen Ordnungszahlen n = 1,...,9, wobei die Frequenz f₁ beim Raummode n = 1 etwa 1000 Hz beträgt und die Frequenz f₂ beim Raummode n = 2 bei ungefähr 2000 Hz liegt. Die oben genannte Gleichung fₙ = (c₀ × n) / (2 × A) beschreibt mathematisch die akustischen Schwingungsverhältnisse in einem idealen Hohlzylinder mit einer durch verschiebbare Deckflächen variablen axialen Länge (Abstand A). Die daraus durch Umformen gebildete Gleichung A = (c₀ × n) / (2 × fₙ) ermöglicht bei Kenntnis der Schallgeschwindigkeit c₀, mindestens einer Eigenfrequenz fₙ und der Ordnungszahl n der zugehörigen Raummode die Berechnung des jeweiligen Abstands A_{1,} A₂, A₃ zwischen der Abdeckplatte 20 und dem freien Ende 34 des Stützkolbens 32 der Luftfeder 10 und damit der Einfederungslänge E der Luftfeder 10 mittels der Elektronikeinheit 66.

Aus der Gleichung A = (c₀ × n) / (2 × fₙ) folgt mit einem Wert von c₀ = 344 m/s für Luft bei 20°C und 101,3 kPa sowie n = 1 und der Eigenfrequenz f₁ = 1000 Hz ein beispielhafter Abstand A zwischen der Innenfläche 60 der Abdeckplatte 20 sowie der Stirnfläche 40 des Stützkolbens 32 der Luftfeder 10 von ungefähr 17,2 cm. Derselbe Wert für den Abstand A ergibt sich mit der Eigenfrequenz f₁ = 2.000 Hz und n = 2. Es können auch Zwischenabstände gemessen werden.

Um unterschiedliche Umgebungsbedingungen und Einsatzbedingungen des mit der Luftfeder 10 ausgestatteten Fahrzeugs zu berücksichtigen kann es vorteilhaft sein, den aktuellen statischen Druck, die aktuelle Temperatur und/oder die Feuchte der Druckluft im Innenraum 44 der Luftfeder 10 zu messen und einen solchermaßen korrigierten Wert für die Schallgeschwindigkeit c₀ bei der Auswertung der genannten Gleichungen mittels der Elektronikeinheit 66 zu berücksichtigen.

### Bezugszeichenliste

- 10: Luftfeder
- 12: Balg, Rollbalg
- 14: Erstes axiales Ende des Rollbalgs
- 16: Zweites axiales Ende des Rollbalgs
- 18: Spannmanschette
- 20: Abdeckplatte
- 26: Ringwulst des Rollbalgs
- 28: Spannring
- 32: Abstützbauteil, Stützkolben
- 34: Freies axiales Ende des Stützkolbens
- 36: Fahrwerksseitiges Ende des Stützkolbens
- 38: Fahrwerk
- 40: Stirnfläche des Stützkolbens
- 44: Innenraum
- 46: Hohlzylindrisches Stützpolster
- 48: Druckversorgung
- 50: Zuleitung
- 52: Längsmittelachse der Luftfeder
- 56: Schallquelle
- 58: Schallsensor
- 60: Innenfläche (Abdeckplatte)
- 62: Akustisches Signal
- 64: Rauschsignal
- 66: Elektronikeinheit, Steuergerät
- 68: Elektrische Zuleitung
- 70: Akustisches Antwortsignal
- 72: Elektronisch auswertbares Ausgangssignal
- 76: Einfederungslängenmesseinrichtung
- 80: Untergrund
- 82: Minimalniveau
- 84: Fahrniveau
- 86: Maximalniveau
- 100: Erstes Diagramm
- 110: Zweites Diagramm
- 112: Frequenzspektrum
- A₁: Erster Abstand
- A₂: Zweiter Abstand
- A₃: Dritter Abstand
- c₀: Schallgeschwindigkeit
- fₙ: Eigenfrequenz
- G_{H}: Gesamthöhe
- E: Einfederungslänge der Luftfeder
- n: Ordnungszahl
- p: Schalldruck
- c₀: Schallgeschwindigkeit

## Patentansprüche

1. Luftfeder (10) für ein Fahrzeug, mit einem schlauchartigen Balg (12), dessen erstes axiales Ende (14) an einer karosserieseitigen Abdeckplatte (20) und dessen zweites axiales Ende (16) an einem fahrwerksseitigen Abstützbauteil (32) zur Ausbildung und Umgrenzung eines geschlossenen Innenraumes (44) befestigt ist, sowie mit Mitteln zum Feststellen der Einfederungslänge (E) der Luftfeder (10), **dadurch gekennzeichnet, dass** im Bereich einer in Richtung des Innenraumes (44) weisenden Innenfläche (60) der Abdeckplatte (20) mindestens eine akustische Schallquelle (56) und mindestens ein akustischer Schallsensor (58) angeordnet sind, dass das akustische Signal (62) der Schallquelle (56) ein angenähertes Rauschsignal (64), ein akustisches Chirp-Signal oder ein akustisches Sweep-Signal mit Frequenzen zwischen
0 Hz und 20000 Hz ist, dass der mindestens eine Schallsensor (58) zur Weiterleitung eines Ausgangssignals (72) desselben mit einer Elektronikeinheit (66) signaltechnisch verbunden ist, und dass die Elektronikeinheit (66) derartig ausgebildet ist, dass mittels des Ausgangssignals (72) des akustischen Schallsensors (58) der Abstand (A₁, A₂, A₃) zwischen der Innenfläche (60) der Abdeckplatte (20) sowie einer Stirnfläche (40) des Abstützbauteils (32) und somit die Einfederungslänge (E) der Luftfeder (10) ermittelbar ist.

2. Luftfeder nach Anspruch 1, **dadurch gekennzeichnet, dass** das akustische Signal (62) ein angenähertes Rauschsignal (64), ein akustisches Chirp-Signal oder ein akustisches Sweep-Signal mit Frequenzen zwischen 0 Hz und 3000 Hz ist.

3. Luftfeder nach Anspruch 1 oder 2, **dadurch gekennzeichnet, dass** die Elektronikeinheit (66) dazu ausgebildet ist, das Ausgangssignal (72) des mindestens einen Schallsensors (58) mittels einer Frequenzanalyse in Echtzeit auszuwerten.

4. Verfahren zur Bestimmung eines Abstands (A_{1,} A₂, A₃) zwischen einer Innenfläche (60) einer karosserieseitigen Abdeckplatte (20) und einer Stirnfläche (40) eines fahrwerksseitigen Abstützbauteils (32) einer Luftfeder (10) für ein Kraftfahrzeug gemäß einem der Ansprüche 1 bis 3, wobei ein erstes axiales Ende (14) eines Balgs (12) an der Abdeckplatte (20) und ein zweites axiales Ende (16) des Balgs (12) an dem Abstützbauteil (32) zur Ausbildung und Umgrenzung eines geschlossenen Innenraumes (44) befestigt ist, **gekennzeichnet durch** die folgenden Schritte:
a) Einkoppeln eines akustischen Signals (62) in den Innenraum (44) der Luftfeder (10) mittels mindestens einer im Bereich der Innenfläche (60) der Abdeckplatte (20) angeordneten akustischen Schallquelle (56),
b) Messen eines akustischen Antwortsignals (70), dieses erzeugt durch Reflektion des akustischen Signals (62) an wenigstens einem den Innenraum (44) begrenzenden Bauteil, mittels mindestens eines im Bereich der Innenfläche (60) der Abdeckplatte (20) positionierten akustischen Schallsensors (58) zum Erzeugen eines elektronisch auswertbaren Ausgangssignals (72) desselben, und
c) Auswerten des Ausgangssignals (72) des mindestens einen Schallsensors (58) mittels einer Elektronikeinheit (66) zur Bestimmung des Abstandes (A₁, A₂, A₃) und damit der Einfederungslänge (E) der Luftfeder (10).

5. Verfahren nach Anspruch 4, **dadurch gekennzeichnet, dass** mit der mindestens einen Schallquelle (56) ein angenähertes Rauschsignal (64) mit Frequenzen zwischen 0 Hz und 20000 Hz erzeugt wird.

6. Verfahren nach Anspruch 4, **dadurch gekennzeichnet, dass** mit der mindestens einen Schallquelle (56) ein angenähertes Rauschsignal (64) mit Frequenzen zwischen 0 Hz und 3000 Hz erzeugt wird.

7. Verfahren nach Anspruch 4, **dadurch gekennzeichnet, dass** das akustische Signal (62) der Schallquelle (56) ein akustisches Chirp-Signal oder ein akustisches Sweep-Signal ist, mit Frequenzen zwischen 0 Hz und 20000 Hz.

8. Verfahren nach Anspruch 4, **dadurch gekennzeichnet, dass** das akustische Signal (62) der Schallquelle (56) ein akustisches Chirp-Signal oder ein akustisches Sweep-Signal ist, mit Frequenzen zwischen 0 Hz und 3000 Hz.

9. Verfahren nach einem der Ansprüche 4 bis 8, **dadurch gekennzeichnet, dass** das Ausgangssignal (72) mittels einer Frequenzanalyse zur Erzeugung eines Frequenzspektrums ausgewertet wird.

10. Verfahren nach einem der Ansprüche 4 bis 9, **dadurch gekennzeichnet, dass** mittels mindestens einer Eigenfrequenz f_{1,...,n} mit einer zugeordneten Ordnungszahl n der Raummode aus dem Frequenzspektrum sowie mit der Formel A = (c₀ x n) / (2 x fₙ) die Bestimmung des Abstands (A₁, A₂, A₃) erfolgt, wobei c₀ die Schallgeschwindigkeit, n eine Ordnungszahl und fₙ die Eigenfrequenz ist.

11. Verfahren nach einem der Ansprüche 4 bis 10, **dadurch gekennzeichnet, dass** mithilfe der ermittelten Einfederungslänge (E) der Luftfeder (10) eine resultierende Gesamthöhe (G_{H}) eines mit der Luftfeder (10) ausgerüsteten Fahrzeugs mit Hilfe der Elektronikeinheit (66) bestimmt wird.

12. Verfahren nach einem der Ansprüche 4 bis 11, **dadurch gekennzeichnet, dass** beim Auswerten des Ausgangssignals (72) zur Bestimmung des Abstands (A₁, A₂, A₃) Kalibrierparameter von einer vorab erfolgten Kalibrierung der Elektronikeinheit (66) berücksichtigt werden.

13. Verfahren nach Anspruch 12, **dadurch gekennzeichnet, dass** die Kalibrierung mit mindestens drei unterschiedlichen bekannten Kalibrierabständen der Luftfeder (10) erfolgt, wobei die Kalibrierabstände mit einem Fahrniveau (84), einem Maximalniveau (86) und einem Minimalniveau (82) eines mit der Luftfeder (10) ausgerüsteten Fahrzeugs korrespondieren.

14. Steuergerät welches zur Durchführung eines Verfahrens nach einem der Ansprüche 4 bis 13 ausgebildet ist, **dadurch gekennzeichnet, dass** das Steuergerät dazu ausgebildet ist, das Ausgangssignal (72) des mindestens einen Schallsensors (58) mittels einer Frequenzanalyse in Echtzeit auszuwerten.

## Claims

1. Pneumatic spring (10) for a vehicle with a hose-like bellows (12), the first axial end (14) of which is fastened on a vehicle body side cover plate (20) and the second axial end (16) of which is fastened on a chassis side support component (32) for the formation and delimitation of a closed internal space (44), as well as means for determining the deflection length (E) of the pneumatic spring (10), **characterized in that** at least one acoustic sound source (56) and at least one acoustic sound sensor (58) are arranged in the region of an inner surface (60) of the cover plate (20) pointing in the direction of the internal space (44), **in that** the acoustic signal (62) of the sound source (56) is an approximated noise signal (64), an acoustic chirp signal or an acoustic sweep signal with frequencies between 0 Hz and 20000 Hz, **in that** the at least one sound sensor (58) is connected to an electronic unit (66) for signaling purposes for forwarding an output signal (72) of said sound sensor, and that the electronic unit (66) is configures such that by means of the output signal (72) of the acoustic sound sensor (58) the distance (A₁, A₂, A₃) between the inner surface (60) of the cover plate (20) and an end face (40) of the support component (32) and hence the deflection length (E) of the pneumatic spring (10) can be determined.

2. The pneumatic spring according to claim 1, **characterized in that** the acoustic signal (62) is an approximated noise signal (64), an acoustic chirp signal or an acoustic sweep signal with frequencies between 0 Hz and 3000 Hz.

3. The pneumatic spring according to claim 1 or 2, **characterized in that** the electronic unit (66) is configured to evaluate the output signal (72) of the at least one sound sensor (58) by means of a frequency analysis in real time.

4. A method for determining a distance (A₁, A₂, A₃) between an inner surface (60) of a vehicle body side cover plate (20) and an end face (40) of a chassis side support component (32) of a pneumatic spring (10) for a motor vehicle according to any of claims 1 to 3, wherein a first axial end (14) of a bellows (12) is fastened on the cover plate (20) and a second axial end (16) of the bellows (12) is fastened on the support component (32) for the formation and delimitation of a closed internal space (44), **characterized by** the following steps:
a) Coupling an acoustic signal (62) into the internal space (44) of the pneumatic spring (10) by means of at least one acoustic sound source (56) arranged in the region of the inner surface (60) of the cover plate (20),
b) Measuring an acoustic response signal (70), said acoustic response signal generated by reflection of the acoustic signal (62) to at least one component adjoining the internal space (44), by means of an acoustic sound sensor (58) positioned in the region of the inner surface (60) of the cover plate (20) for generating an electronically evaluable output signal (72) of the same, and
c) Evaluating the output signal (72) of the at least one sound sensor (58) by means of an electronic unit (66) for determining the distance (A₁, A₂, A₃) and hence the deflection length (E) of the pneumatic spring (10).

5. The method according to claim 4, **characterized in that** an approximated noise signal (64) with frequencies between 0 Hz and 20000 Hz is generated with the at least one sound source (56).

6. The method according to claim 4, **characterized in that** an approximated noise signal (64) with frequencies between 0 Hz and 3000 Hz is generated with the at least one sound source (56).

7. The method according to claim 4, **characterized in that** the acoustic signal (62) of the sound source (56) is an acoustic chirp signal or an acoustic sweep signal, with frequencies between 0 Hz and 20000 Hz.

8. The method according to claim 4, **characterized in that** the acoustic signal (62) of the sound source (56) is an acoustic chirp signal or an acoustic sweep signal, with frequencies between 0 Hz and 3000 Hz.

9. The method according to any of claims 4 to 8, **characterized in that** the output signal (72) is evaluated by means of a frequency analysis to generate a frequency spectrum.

10. The method according to any of claims 4 to 9, **characterized in that** the determination of the distance (A₁, A₂, A₃) takes place by means of at least one eigen frequency f_{1,...,n} with an assigned ordinal number n of the room mode from the frequency spectrum as well as with the formula A = ( (c₀ x n) / (2 x fₙ), wherein c₀ is the sound velocity, n is an ordinal number and fₙ is the eigen frequency.

11. The method according to any of claims 4 to 10, **characterized in that** with the aid of the determined deflection length (E) of the pneumatic spring (10), a resulting total height (G_{H}) of a vehicle equipped with the pneumatic spring (10) is determined with the help of the electronic unit (66).

12. The method according to any of claims 4 to 11, **characterized in that** calibration parameters of a prior calibration of the electronic unit (66) are considered in the evaluation of the output signal (72) for determining the distance (A₁, A₂, A₃) .

13. The method according to claim 12, **characterized in that** the calibration occurs with at least three different known calibration distances of the pneumatic spring (10), wherein the calibration distances correspond to a driving level (84), a maximum level (86) and a minimum level (82) of a vehicle equipped with the pneumatic spring (10).

14. A control unit which is configured for carrying out a method according to any of claims 4 to 13, **characterized in that** the control unit is configured to evaluate the output signal (72) of the at least one sound sensor (58) by means of a frequency analysis in real time.

## Revendications

1. Ressort pneumatique (10) pour un véhicule, avec un soufflet (12) tubulaire dont la première extrémité axiale (14) est fixée contre une plaque de recouvrement (20) côté carrosserie et dont la seconde extrémité axiale (16) est fixée contre une composante d'appui (32) côté suspension pour former et délimiter un espace intérieur (44) fermé, ainsi qu'avec des moyens pour constater la longueur de débattement (E) du ressort pneumatique (10), **caractérisé en ce que** dans la région d'une surface intérieure (60), de la plaque de recouvrement (20), qui pointe dans la direction de l'espace intérieur (44) sont agencés au moins une source de son (56) acoustique et au moins un capteur de son (58) acoustique, **en ce que** le signal acoustique (62) de la source de son (56) est un signal de bruit (64) approché, un signal chirp acoustique ou un signal de balayage acoustique avec des fréquences entre 0 Hz et 20 000 Hz, **en ce que** le au moins un capteur de son (58) est relié par technique de signalisation à une unité électronique (66) pour transférer un signal de sortie (72) de celui-ci, et **en ce que** l'unité électronique (66) est conçue de sorte qu'au moyen du signal de sortie (72) du capteur de son (58) acoustique puisse être déterminée la distance (A₁, A₂, A₃) entre la surface intérieure (60) de la plaque de recouvrement (20) ainsi que d'une surface frontale (40) de la composante d'appui (32), et ainsi la longueur de débattement (E) du ressort pneumatique (10).

2. Ressort pneumatique selon la revendication 1, **caractérisé en ce que** le signal acoustique (62) est un signal de bruit (64) approché, un signal chirp acoustique ou un signal de balayage acoustique avec des fréquences entre 0 Hz et 3 000 Hz.

3. Ressort pneumatique selon la revendication 1 ou 2, **caractérisé en ce que** l'unité électronique (66) est conçue pour exploiter en temps réel le signal de sortie (72) du au moins un capteur de son (58) au moyen d'une analyse fréquentielle.

4. Procédé destiné à déterminer une distance (A₁, A₂, A₃) entre une surface intérieure (60) d'une plaque de recouvrement (20) côté carrosserie et une surface frontale (40) d'une composante d'appui (32) côté suspension d'un ressort pneumatique (10) pour un véhicule selon l'une des revendications 1 à 3, dans lequel une première extrémité axiale (14) d'un soufflet (12) est fixée contre la plaque de recouvrement (20) et une seconde extrémité axiale (16) du soufflet (12) est fixée contre la composante d'appui (32) pour former et délimiter un espace intérieur (44) fermé, **caractérisé par** les étapes suivantes qui consistent à :
a) coupler un signal acoustique (62) dans l'espace intérieur (44) du ressort pneumatique (10) au moyen d'au moins une source de son (56) acoustique agencée dans la région de la surface intérieure (60) de la plaque de recouvrement (20),
b) mesurer un signal de réponse (70) acoustique, lequel a été produit par réflexion du signal acoustique (62) contre au moins une composante qui délimite l'espace intérieur (44), au moyen d'au moins un capteur de son (58) acoustique positionné dans la région de la surface intérieure (60) de la plaque de recouvrement (20), pour produire un signal de sortie (72) qui peut être exploité électroniquement, et
c) exploiter le signal de sortie (72) du au moins un capteur de son (58) acoustique au moyen d'une unité électronique (66) pour déterminer la distance (A₁, A₂, A₃) et ainsi la longueur de débattement (E) du ressort pneumatique (10).

5. Procédé selon la revendication 4, **caractérisé en ce qu'**avec la au moins une source de son (56) acoustique est produit un signal de bruit (64) approché avec des fréquences entre 0 Hz et 20 000 Hz.

6. Procédé selon la revendication 4, **caractérisé en ce qu'**avec la au moins une source de son (56) acoustique est produit un signal de bruit (64) approché avec des fréquences entre 0 Hz et 3 000 Hz.

7. Procédé selon la revendication 4, **caractérisé en ce que** le signal acoustique (62) de la source de son (56) est un signal chirp acoustique ou un signal de balayage acoustique avec des fréquences entre 0 Hz et 20 000 Hz.

8. Procédé selon la revendication 4, **caractérisé en ce que** le signal acoustique (62) de la source de son (56) est un signal chirp acoustique ou un signal de balayage acoustique avec des fréquences entre 0 Hz et 3 000 Hz.

9. Procédé selon l'une des revendications 4 à 8, **caractérisé en ce que** le signal de sortie (72) est exploité au moyen d'une analyse fréquentielle pour produire un spectre de fréquences.

10. Procédé selon l'une des revendications 4 à 9, **caractérisé en ce qu'**au moyen d'au moins une fréquence propre f_{1,...,n} avec un nombre ordinal n attribué des modes spatiaux du spectre de fréquences ainsi qu'avec le format A = (c₀ x n) / (2 x fₙ), se produit la détermination de la distance (A₁, A₂, A₃), dans lequel c₀ est la vitesse du son, n est un nombre ordinal et fₙ est la fréquence propre.

11. Procédé selon l'une des revendications 4 à 10, **caractérisé en ce que**, à l'aide de la longueur de débattement (E) établie du ressort pneumatique (10), est déterminée à l'aide de l'unité électronique (66) une hauteur totale (G_{H}) résultante d'un véhicule équipé du ressort pneumatique (10).

12. Procédé selon l'une des revendications 4 à 11, **caractérisé en ce que**, lors de l'exploitation du signal de sortie (72) pour déterminer la distance (A₁, A₂, A₃), sont pris en considération des paramètres d'étalonnage d'un étalonnage de l'unité électronique (66) effectué au préalable.

13. Procédé selon la revendication 12, **caractérisé en ce que** l'étalonnage s'effectue avec au moins trois distances d'étalonnage connues différentes du ressort pneumatique (10), dans lequel les distances d'étalonnage correspondent à un niveau de roulage (84), un niveau maximal (86) et un niveau minimal (82) d'un véhicule équipé du ressort pneumatique (10).

14. Calculateur, lequel est conçu pour exécuter un procédé selon l'une des revendications 4 à 13, **caractérisé en ce que** le calculateur est conçu pour exploiter en temps réel le signal de sortie (72) du au moins un capteur de son (58) au moyen d'une analyse fréquentielle.
